(19) Europäisches Patentamt
European Patent Office
Office européen des brevets

(11) EP 1 108 739 B1

(12) EUROPÄISCHE PATENTSCHRIFT

(45) Veröffentlichungstag und Bekanntmachung des Hinweises auf die Patenterteilung:
**26.02.2003 Patentblatt 2003/09**

(51) Int Cl.7: **C08G 77/50**, C08J 3/03, C09D 183/14

(21) Anmeldenummer: **00124326.0**

(22) Anmeldetag: **16.11.2000**

(54) **Mehrphasige Zubereitungen von Organosiliciumverbindungen**

Multiphase compositions of organosilicon compounds

Compositions à plusieurs phases à base de composés d'organosilice

(84) Benannte Vertragsstaaten:
**BE DE FR GB**

(30) Priorität: **14.12.1999 DE 19960291**

(43) Veröffentlichungstag der Anmeldung:
**20.06.2001 Patentblatt 2001/25**

(73) Patentinhaber: **Wacker-Chemie GmbH
81737 München (DE)**

(72) Erfinder:
- **Herzig, Christian, Dr.
83329 Feichten, Waging am See (DE)**
- **Schröck, Robert, Dr.
84503 Altötting (DE)**
- **Gratzl, Petra
84577 Tüssling (DE)**
- **Stallbauer, Reinhard
84367 Gumpersdorf (DE)**

(74) Vertreter: **Deffner-Lehner, Maria, Dr. et al
Wacker-Chemie GmbH,
Hanns-Seidel-Platz 4
81737 München (DE)**

(56) Entgegenhaltungen:
**EP-A- 0 874 017 US-A- 5 241 034**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren zur Herstellung von mehrphasigen Zubereitungen von Organosiliciumverbindungen. Die Erfindung betrifft weiterhin mehrphasige Zubereitungen von Organosiliciumverbindungen.

In EP-A 414 938 (Nippon Unicar Company Limited, offengelegt am 6. März 1991) sind Zusammensetzungen beschrieben, die ein vernetzbares thermoplastisches Harz, ein organisches Peroxid und ein lineares Organopolysiloxan enthalten. Das lineare Organopolysiloxan wird durch Umsetzung von $\alpha,\omega$-Dihydrogensiloxanen mit $\alpha,\omega$-Dienen in Gegenwart von Platinkatalysatoren erhalten. Die Linearpolymere enthalten mindestens eine endständige C=C-Doppelbindung.

US-A 5,241,034 (Wacker-Chemie GmbH, ausgegeben am 31. August 1993) offenbart Siloxancopolymere mit 1-Alkenylgruppen, die linear oder verzweigt sein können und durch Polyaddition von Hydrogensiloxanen und Olefinen mit mindestens zwei endständigen C=C-Doppelbindungen hergestellt werden, so daß sie Siloxan- und Kohlenwasserstoffblöcke alternierend enthalten. Die Siloxancopolymere weisen eine bevorzugte Viskosität von 10 bis 10 000 mPa. s bei 25°C auf. Die Olefine mit mindestens zwei endständigen C=C-Doppelbindungen haben den Nachteil, daß die endständigen C=C-Doppelbindungen, unter Einwirkung von Si-H-Gruppen und Edelmetallkatalysatoren in thermodynamisch stabilere innere Doppelbindungen isomerisieren, die dann gegenüber Hydrosilylierung weitgehend inaktiv sind, d.h. die Polyaddition bricht ab.

In EP-A 874 017 (Dow Corning S.A., offengelegt am 28.Oktober 1998) wird ein Verfahren zur Herstellung einer Silicon-in-Wasser-Emulsion beschrieben, wobei eine Zusammensetzung aus zwei verschiedenen linearen Polysiloxanen, die in Gegenwart eines Hydrosilylierungskatalysators unter Kettenverlängerung miteinander reagieren, mit Emulgator und Wasser gemischt wird und die Mischung emulgiert wird. Es werden Emulsionen von Polysiloxanen mit einem weiten Bereich von monodispersen Partikelgrößen und Molekulargewichten erhalten. So können Emulsionen von Polysiloxanen mit hohen Viskositäten in der dispersen Phase erhalten werden.
Die Polyaddition der beiden linearen Polysiloxane erfolgt in der dispersen Phase und es werden Emulsionen von hochviskosen Polymeren erhalten.

Es bestand die Aufgabe ein Verfahren zur Herstellung von mehrphasigen Zubereitungen von Organosiliciumverbindungen, insbesondere ein Verfahren zur Herstellung von wäßrigen Emulsionen von Organosiliciumverbindungen, bereitzustellen, das einfach ist und in dem nur eine Art von Organopolysiloxan eingesetzt werden muß und in dem auch verzweigte Organosiliciumverbindungen erhalten werden.
Weiterhin bestand die Aufgabe mehrphasige Zubereitungen von Organosiliciumverbindungen, insbesondere wäßrige Emulsionen von Organosiliciumverbindungen bereitzustellen, wobei die Organosiliciumverbindungen eine hohe Viskosität aufweisen. Die Aufgabe wird durch die Erfindung gelöst.

Gegenstand der Erfindung ist ein Verfahren zur Herstellung von mehrphasigen Zubereitungen von Organosiliciumverbindungen durch (A) Bildung einer Mischung enthaltend
mindestens zwei aliphatische Doppelbindungen enthaltende organische Verbindung (1) der allgemeinen Formel

$$R^2(CR^1{=}CH2)_x, \qquad (I)$$

wobei

$R^1$ ein Wasserstoffatom oder einen Alkylrest mit 1 bis 6 Kohlenstoffatomen je Rest,
$R^2$ einen zweiwertigen, dreiwertigen oder vierwertigen Kohlenwasserstoffrest mit 1 bis 25 Kohlenstoffatomen je Rest und x 2, 3 oder 4 bedeutet,

Organopolysiloxan (2) mit durchschnittlich mehr als einem Si-gebundenen Wasserstoffatom je Molekül,
die Anlagerung von Si-gebundenem Wasserstoff an aliphatische Doppelbindung förderndem Katalysator (3),
Emulgator (4)
und mit (1) und (2) nicht mischbarem Mittel (5)
und (B) Emulgieren der Mischung
mit der Maßgabe, daß
aliphatische Doppelbindung in organischer Verbindung (1) zu Si-gebundenem Wasserstoff im Organopolysiloxan (2) im Verhältnis von 0,1:1 bis 20:1 vorliegt.

Gegenstand der Erfindung sind weiterhin mehrphasige Zubereitungen von Organosiliciumverbindungen herstellbar durch (A) Bildung einer Mischung enthaltend mindestens zwei aliphatische Doppelbindungen enthaltende organische Verbindung (1) der allgemeinen Formel

$$R^2(CR^1{=}CH_2)_x, \qquad (I)$$

wobei

$R^1$ ein Wasserstoffatom oder einen Alkylrest mit 1 bis 6 Kohlenstoffatomen je Rest,
$R^2$ einen zweiwertigen, dreiwertigen oder vierwertigen Kohlenwasserstoffrest mit 1 bis 25 Kohlenstoffatomen je Rest und x 2, 3 oder 4 bedeutet,

Organopolysiloxan (2) mit durchschnittlich mehr als einem Si-gebundenen Wasserstoffatom je Molekül,
die Anlagerung von Si-gebundenem Wasserstoff an aliphatische Doppelbindung förderndem Katalysator (3),
Emulgator (4)
und mit (1) und (2) nicht mischbarem Mittel (5)
und (B) Emulgieren der Mischung
mit der Maßgabe, daß
aliphatische Doppelbindung in organischer Verbindung (1) zu Si-gebundenem Wasserstoff im Organopolysiloxan (2) im Verhältnis von 0,1:1 bis 20:1 vorliegt.

Vorzugsweise handelt es sich bei dem erfindungsgemäßen Verfahren um ein Verfahren zur Herstellung von zweiphasigen Zubereitungen.

Bei dem erfindungsgemäßen Verfahren wird vorzugsweise als mit (1) und (2) nicht mischbarem Mittel (5) Wasser eingesetzt.

Vorzugsweise werden daher bei dem erfindungsgemäßen Verfahren als mehrphasige Zubereitungen wäßrige Dispersionen, bevorzugt wäßrige Emulsionen erhalten.

Nach dem erfindungsgemäßen Verfahren werden als Siloxancopolymere solche erhalten, die in Toluol löslich sind, d.h. es werden unvernetzte Siloxancopolymere erhalten, im Gegensatz zu in Toluol unlöslichen Siloxancopolymeren, die vernetzt sind. Die erhaltenen Siloxancopolymere sind in jedem Mischungsverhältnis in Toluol löslich, vorzugsweise sind sie bei einer Temperatur von 25°C und einem Druck von etwa bei 1020 hPa zu 100 Gewichtsprozent in Toluol löslich, wenn Siloxancopolymere und Toluol im Verhältnis 1:1 (Gewichtsteile) gemischt werden.

In den nach dem erfindungsgemäßen Verfahren erhaltenen Siloxancopolymeren sind die Siloxanblöcke über Kohlenwasserstoffgruppen miteinander verbunden, woraus eine Kohlenwasserstoff-Siloxan-Blockstruktur resultiert. Vorzugsweise beträgt die Summe der Kohlenwasserstoffgruppen in den Siloxancopolymeren 0,1 bis 70 Gew.-%, bevorzugt 0,1 bis 10 Gew.-%, jeweils bezogen auf das Gesamtgewicht der Siloxancopolymere. Das erfindungsgemäße Polyadditionsverfahren führt zwangsläufig zu einer Polymerverteilung in bezug auf die Siloxan- wie auf die Kohlenwasserstoffblöcke.

Die nach dem erfindungsgemäßen Verfahren erhaltenen Siloxancopolymere besitzen vorzugsweise eine Viskosität von mindestens 20 000 mPa.s bei 25°C, bevorzugt mindestens 500 000 mPa.s bei 25°C, insbesondere mindestens $1 \times 10^6$ mPa.s bei 25°C und eine Viskosität von vorzugsweise bis zu $5 \times 10^8$ bei 25°C, bevorzugt bis zu $1 \times 10^8$ mPa.s bei 25°C.

Beispiele für Alkylreste $R^1$ sind der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest und Hexylreste, wie der n-Hexylrest. Bevorzugt ist $R^1$ ein Wasserstoffatom.

Beispiele für mindestens zwei aliphatische Doppelbindungen aufweisende organische Verbindung (1), die bei dem erfindungsgemäßen Verfahren eingesetzt wird, sind

1,5-Hexadien,
1,7-Octadien,
1,9-Decadien,
1,11-Dodecadien,
1,13-Tetradecadien,
3,5-Dimethyl-1,6-heptadien,
3,5-Dimethyl-4-vinyl-1,6-heptadien,
l,2,4-Trivinylcyclohexan,
1,3,5-Trivinylcyclohexan,
1,4-Divinylbenzol und
1,2,3,4-Tetravinylcyclobutan,

wobei 1,2,4-Trivinylcyclohexan und 1,7-Octadien bevorzugt sind.

Beispiele für den Rest $R^2$ sind daher solche der Formel

$-(CH_2)_2-$

$-(CH_2)_4-$

$-(CH_2)_6-$

$-(CH_2)_8-$

$-(CH_2)_{10}-$

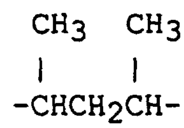

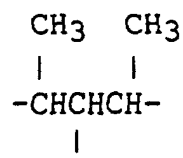

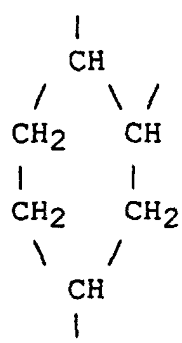

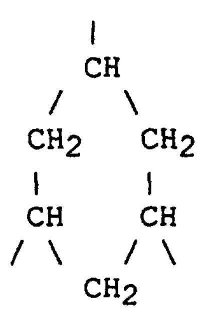

$$-C_6H_4-$$

und

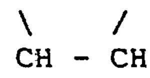

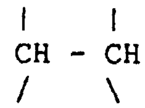

wobei die Reste der Formel

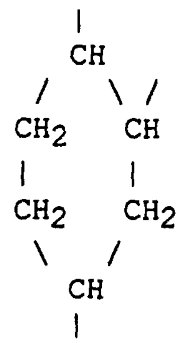

und

$$-(CH_2)_4-$$

bevorzugt sind.

Vorzugsweise enthalten die bei dem erfindungsgemäßen Verfahren eingesetzten Organopolysiloxane (2) durchschnittlich mindestens 1,5 Si-gebundene Wasserstoffatome, bevorzugt durchschnittlich mindestens 2 Si-gebundene Wasserstoffatome je Molekül.

Besonders bevorzugt enthalten die bei dem erfindungsgemäßen Verfahren eingesetzten Organopolysiloxane (2) 2 bis 4 Si-gebundene Wasserstoffatome je Molekül.

Bei dem erfindungsgemäßen Verfahren kann eine Art von Organopolysiloxan (2) oder verschiedene Arten von Organopolysiloxan (2) eingesetzt werden. Auch sind die Organopolysiloxane (2) herstellungsbedingt Gemische, d.h. beispielsweise enthalten Organopolysiloxane mit 2 Si-gebundenen Wasserstoffatomen je Molekül auch Organopolysiloxane mit nur einem Si-gebundenen Wasserstoffatom je Molekül.

Vorzugsweise werden als Organopolysiloxane (2) solche der allgemeinen Formel

$$H_eR_fSiO_{\frac{4-(e-f)}{2}} \qquad (II),$$

wobei R gleiche oder verschiedene, gegebenenfalls halogenierte Kohlenwasserstoffreste mit 1 bis 18 Kohlenstoffatom(en) je Rest bedeuten,
e 0 oder 1, durchnittlich 0,002 bis 1,0,
f 0, 1, 2 oder 3, durchschnittlich 1,0 bis 2,0, und
die Summe e+f nicht größer als 3 ist,

bei dem erfindungsgemäßen Verfahren eingesetzt.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest. Bevorzugt ist der Methylrest.

Beispiele für substituierte Reste R sind Halogenalkylreste, wie der 3,3,3-Trifluor-n-propylrest, der 2,2,2,2',2',2'-Hexafluorisopropylrest, der Heptafluorisopropylrest, und Halogenarylreste, wie der o-, m- und p-Chlorphenylrest.

Bevorzugt werden als Organopolysiloxane (2) solche der allgemeinen Formel

$$H_dR_{3-d}SiO(SiR_2O)_o(SiRHO)_pSiR_{3-d}H_d \qquad (III),$$

wobei

R die oben dafür angegebene Bedeutung hat,
d 0 oder 1, insbesondere 1,
o 0 oder eine ganze Zahl von 1 bis 1000 und
p 0 oder eine ganze Zahl von 1 bis 6, insbesondere 0,

bedeutet,
bei dem erfindungsgemäßen Verfahren eingesetzt.

Die Organopolysiloxane (2) besitzen vorzugsweise eine Viskosität von 0,5 bis 20 000 mPa.s bei 25°C, bevorzugt 20 bis 2 000 mPa.s bei 25°C.

Bevorzugte Beispiele für Organopolysiloxane der Formel (III) sind Mischpolymerisate aus Dimethylhydrogensiloxan- und Dimethylsiloxaneinheiten, Mischpolymerisate aus Dimethylhydrogensiloxan-, Dimethylsiloxan- und Methylhydrogensiloxaneinheiten, Mischpolymerisate aus Trimethylsiloxan-und Methylhydrogensiloxaneinheiten und Mischpolymerisate aus Trimethylsiloxan-, Dimethylsiloxan- und Methylhydrogensiloxaneinheiten. Besonders bevorzugte Beispiele für Organopolysiloxane der Formel (III) sind Mischpolymerisate aus Dimethylhydrogensiloxan- und Dimethylsiloxaneinheiten.

Verfahren zum Herstellen von Organopolysiloxanen mit mindestens zwei Si-gebundenen Wasserstoffatomen je Molekül, auch von solchen der bevorzugten Art, sind allgemein bekannt.

Organische Verbindung (1) wird bei dem erfindungsgemäßen Verfahren in solchen Mengen eingesetzt, daß aliphatische Doppelbindung in organischer Verbindung (1) zu Si-gebundenem Wasserstoff in Organopolysiloxan (2) im Verhältnis von 0,1 : 1 bis 20 : 1, vorliegt.

Sofern es sich bei dem Organopolysiloxan (2) um ein α,ω-Dihydrogensiloxan und bei der organischen Verbindung (1) um ein α,ω-Dien handelt, kann das C=C/SiH-Verhältnis im angegebenen Bereich frei variiert werden. Es werden immer Siloxancopolymere erhalten, die in Toluol beliebig löslich sind, wobei das eingesetzte C=C/SiH-Verhältnis die Art und durchschnittliche Kettenlänge des Polyadduktes nach beendeter Reaktion bestimmt.

Ist dieses Verhältnis kleiner als 1,0, so entstehen SiHfunktionelle Siloxancopolymere; ist es größer als 1,0 werden ω-alkenylfunktionelle Siloxancopolymere erhalten. Kurze Polyaddukte werden bei niedrigen oder hohen Verhältniszahlen erhalten, lange Polyaddukte werden erhalten, falls die Anzahl von eingesetzten C=C- und SiH-Gruppen gleich ist und die Reaktion vollständig abläuft.

Werden Edukte (1) und/oder (2) eingesetzt, die eine höhere Funktionalität als 2,0 besitzen, wird vozugsweise ein mehr oder weniger großer Bereich des C=C/SiH-Verhältnis von 1,0 nach oben und unten ausgeschlossen, damit in Toluol lösliche Siloxancopolymere erhalten werden. Dieser Bereich kann abhängig von Art und Menge der Edukte (1) oder (2) experimentell ermittelt werden. Generell gilt, daß je höher die durchschnittliche Funktionalität der Edukte (1) oder (2) ist, desto unstöchiometrischer sie eingesetzt werden müssen, um in Toluol lösliche Siloxancopolymere zu erhalten.

Sind die Edukte (1) und (2) jeweils bifunktionele, d.h. es werden α,ω-Dihydrogensiloxan und α,ω-Dien eingesetzt, so ist das C=C/SiH-Verhältnis vorzugsweise 0,5 bis 2,0, bevorzugt 0,8 bis 1,2, besonders bevorzugt 0,9 bis 1,1. Bei einem C=C/SiH-Verhältnis von 0,9 bis 1,1 werden hochviskose Siloxancopolymere erhalten. Damit hochviskose Siloxancopolymere erhalten werden müssen folgende Voraussetzungen gegeben sein: Die Edukte (1) und (2) müssen jeweils saubere Endstopperung aufweisen, d.h. eine Funktionalität von 2,0; während der Polyaddition dürfen in nur sehr geringem Ausmaß Nebenreaktionen, wie die Umwandlung von Si-H in Si-OH oder die Isomerisierung von

1-Alkenyl- zu 2-Alkenylgruppen, auftreten; und die Polyaddition muß vollständig ablaufen. Das Auftreten von im Sinn der Polyaddition nicht reaktiven Gruppen, wie SiOH- oder 2-Alkenylgruppen, führt zum Abbruch der Polyaddition an diesen Edukten, da sie de facto monofunktionell sind und damit als Endstopper bei Polyadditionsreaktionen fungieren. Beispiele für zum Abbruch der Polyaddition führende Spezies sind 1,6-Octadien oder $HR_2SiO\ (R_2SiO)_oR_2SiOH$.

Ist mindestens eines der Edukte (1) und (2) höher funktionell als 2 werden mehrphasige Zubereitungen von Polymeren erhalten, die verzweigte Strukturen aufweisen. Der Grad der Verzweigung ist abhängig von der tatsächlichen jeweiligen Funktionalität und dem eingesetzten stöchiometrischen Verhältnis. Je höher die jeweilige Funktionalität der Edukte (1) und (2) ist, desto stärker verzweigte Strukturen werden erhalten und desto größer ist auch der ausgeschlossene Bereich des C=C/SiH-Verhältnisses von 1,0 nach oben und unten. Daher kann auch kein generell bevorzugter Bereich des eingesetzten C=C/SiH-Verhältnisses angegeben werden, sondern immer nur in Abhängigkeit der Funktionalität der Edukte (1) und (2) wie folgende Tabelle zeigt:

| Funktionalität der Edukte (1) | Funktionalität der Edukte (2) | besonders bevorzugtes C=C/SiH-Verhältnis |
|---|---|---|
| 2 | 3 | 2,5:1 bis 1,6:1 und<br>0,4:1 bis 0,6:1 |
| 2 | 4 | 3,0:1 bis 2,2:1 und<br>0,3:1 bis 0,45:1 |
| 2 | 5 | 4,0:1 bis 2,8:1 und<br>0,25:1 bis 0,35:1 |
| 3 | 2 | 2,5:1 bis 1,6:1 und<br>0,4:1 bis 0,6:1 |
| 3 | 3 | 3,0:1 bis 2,2:1 und<br>0,3:1 bis 0,45:1 |
| 3 | 4 | 4,0:1 bis 2,8:1 und<br>0,25:1 bis 0,35:1 |
| 4 | 2 | 3,0:1 bis 2,2:1 und<br>0,3:1 bis 0,45:1 |
| 4 | 3 | 4,0:1 bis 2,8:1 und<br>0,25:1 bis 0,35:1 |

Funktionalität der Edukte (1) bedeutet hierbei die Anzahl der aliphatischen Doppelbindungen (C=C) in organischer Verbindung (1).

Funktionalität der Edukte (2) bedeutet hierbei die durchschnittliche Anzahl der Si-gebundenen Wasserstoffatome (SiH) in Organopolysiloxan (2).

Als die Anlagerung von Si-gebundenem Wasserstoff an aliphatische Doppelbindung fördernde Katalysatoren (3) können auch bei dem erfindungsgemäßen Verfahren die gleichen Katalysatoren eingesetzt werden, die auch bisher zur Förderung der Anlagerung von Si-gebundenem Wasserstoff an aliphatische Doppelbindung eingesetzt werden konnten. Bei den Katalysatoren (3) handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. $PtCl_4$, $H_2PtCl_6{}^*6H_2O$, $Na_2PtCl_4{}^*4H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6{}^*6H_2O$ und Cyclohexanon, Platin-Vinylsiloxankomplexe, wie Platin-1,3-Divinyl-1,1,3,3-tetramethyldisiloxankomplexe mit oder ohne Gehalt an nachweisbarem anorganisch gebundenem Halogen, Bis-(gammapicolin)-platindichlorid, Trimethylendipyridinplatindichlorid, Dicyclopentadienplatindichlorid, Dimethylsulfoxydethylenplatin-(II)-dichlorid, Cyclooctadien-Platindichlorid, Norbornadien-Platindichlorid, Gamma-picolin-Platindichlorid, Cyclopentadien-Platindichlorid sowie Umsetzungsprodukte von Platintetrachlorid mit Olefin und primärem Amin oder sekundärem Amin oder primärem und sekundärem Amin gemäß US-A 4 292 434, wie das Umsetzungsprodukt aus in 1-Octen gelöstem Platintetrachlorid mit sec.-Butylamin, oder Ammonium-Platinkomplexe gemäß EP-B 110 370.

Der Katalysator (3) wird vorzugsweise in Mengen von 0,5 bis 1000 Gew.-ppm (Gewichtsteilen je Million Gewichtsteilen), bevorzugt in Mengen von 2 bis 50 Gew.-ppm, jeweils berechnet als elementares Platin und bezogen auf das Gesamtgewicht von organische Verbindung (1) und Organopolysiloxan (2).

Bei dem erfindungsgemäßen Verfahren können als Emulgatoren (4) alle bisher bekannten, ionischen und nicht-ionischen Emulgatoren sowohl einzeln als auch als Mischungen verschiedener Emulgatoren eingesetzt werden, mit denen auch bisher beständige mehrphasige Zubereitungen, vorzugsweise wäßrige Dispersionen, insbesondere wäßrige Emulsionen, von Organosiliciumverbindungen hergestellt werden konnten.

Beispiele für nicht-ionische Emulgatoren sind: Sorbitanester von Fettsäuren mit 10 bis 22 Kohlenstoffatomen; Polyoxyethylensorbitanester von Fettsäuren mit 10 bis 20 Kohlenstoffatomen und bis zu 35% Ethylenoxidgehalt; Polyoxyethylensorbitolester von Fettsäuren mit 10 bis 22 Kohlenstoffatomen; Polyoxyethylenderivate von Phenolen mit 6 bis 20 Kohlenstoffatomen am Aromaten und bis zu 95% Ethylenoxidgehalt; Fettamino- und Amidobetaine mit 10 bis 22 Kohlenstoffatomen; Polyoxyethylenkondensate von Fettsäuren oder Fettalkoholen mit 10 bis 22 Kohlenstoffatomen mit bis zu 95% Ethylenoxidgehalt; Polyvinylalkohole mit 5 bis 50% Vinylacetateinheiten, mit einem Polymerisationsgrad von 500 bis 3000; Ricinusölethoxylate mit 20 bis 200 Ethylenoxideinheiten.

Beispiele für ionische Emulgatoren sind:

Alkarylsulfonate mit 6 bis 20 Kohlenstoffatomen in der Alkylgruppe; Fettsäureseifen mit 10 bis 22 Kohlenstoffatomen in der Alkylgruppe; Fettsäureseifen mit 10 bis 22 Kohlenstoffatomen; Fettsulfate mit 10 bis 22 Kohlenstoffatomen;

Alkylsulfonate mit 10 bis 22 Kohlenstoffatomen;

Alkalimetallsalze mit Dialkylsulfosuccinaten; Fettaminoxide mit 10 bis 22 Kohlenstoffatomen; Fettimidazoline mit 6 bis 20 Kohlenstoffatomen; Fettamidosulfobetaine mit 10 bis 22 Kohlenstoffatomen;

quarternäre Tenside, wie Fettammoniumverbindungen, mit 10 bis 22 Kohlenstoffatomen; Fettmorpholinoxide mit 10 bis 22 Kohlenstoffatomen; Alkalimetallsalze von carboxylierten ethoxylierten Alkoholen mit 10 bis 22 Kohlenstoffatomen und bis zu 95% Ethylenoxid; Ethylenoxidkondensate von Fettsäurmonoestern des Glycerins mit 10 bis 22 Kohlenstoffatomen und bis 95% Ethylenoxid; Mono- oder Diethanolamide von Fettsäuren mit 10 bis 22 Kohlenstoffatomen; alkoxylierte Silicontenside mit Ethylenoxid- und oder Propylenoxideinheiten; Phosphatester.

Wie auf dem Gebiet der Tenside wohl bekannt, können die Gegenionen im Falle von anionischen Tensiden Alkalimetalle, Ammoniak oder substituierte Amine, wie Triethylamin oder Triethanolamin, sein. Im Falle von kationischen Tensiden ist das Gegenion ein Halogenid, Sulfat oder Methylsulfat. Chloride sind die zumeist industriell verfügbaren Verbindungen.

Bei dem erfindungsgemäßen Verfahren wird Emulgator (4) vorzugsweise in Mengen von 1 bis 20 Gew.-%, bevorzugt 3 bis 15 Gew.-%, bezogen auf das Gesamtgewicht der Bestandteile (1) und (2), eingesetzt.

Weitere Beispiele für mit (1) und (2) nicht mischbarem Mittel (5), die bei dem erfindungsgemäßen Verfahren eingesetzt werden können, sind Polyalkylenoxidverbindungen, die mit Wasser in jedem Verhältnis klar und homogen mischbar sind.

Bei dem erfindungsgemäßen Verfahren wird mit (1) und (2) nicht mischbarem Mittel (5), bevorzugt Wasser (5), in Mengen von vorzugsweise 10 bis 90 Gew.-%, bevorzugt 40 bis 70 Gew.-%, bezogen auf das Gesamtgewicht der Bestandteile (1) und (2), eingesetzt.

Bei dem erfindungsgemäßen Verfahren wird die Mischung (A) mit den üblichen Techniken, z.B. mit Rotor-Stator- oder Dissolver-Rührvorrichtungen, sowie mit Hochdruckhomogenisatoren, in mehrphasige Zubereitungen, vorzugsweise wäßrige, über längere Zeit stabile Dispersionen, bevorzugt Emulsionen, überführt.

Das erfindungsgemäße Verfahren findet bevorzugt in der Anwesenheit von Wasser in der ölphase statt. Dabei kann es sich um eine kontinuierliche Ölphase mit Wassertröpfchen oder auch um eine kontinuierliche Wasserphase mit öltröpfchen handeln. Bevorzugt handelt es sich um eine Öl-in-Wasser-Emulsion. Dies hat den Vorteil, daß sich Emulsionen mit hochmolekularen Siloxancopolymeren in situ in der ölphase herstellen lassen. Es ist also möglich nach dem erfindungsgemäßen Verfahren Emulsionen mit hochmolekularen Siloxancopolymeren herzustellen. Dies war früher überhaupt nicht möglich.

Die Gesamtmenge des Wassers (5) kann in zwei oder mehreren Teilen vor und/oder während der Herstellung der Dispersion, bevorzugt Emulsion, zugegeben werden. Eine bevorzugte Ausführungsform des erfindungsgemäßen Verfahrens ist der Zusatz von nur eines kleinen Teiles der Gesamtmenge des Wassers in Mengen von 1 bis 6 Gew.-%, bezogen auf das Gesamtgewicht der eingesetzten Wassermenge, zu den Bestandteilen (1) und (2). Die Polyaddition erfolgt dabei in einer viskosen Phase, die eine cremige Konsistenz besitzt und eine Viskosität von typischerweise über 100 000 mPa.s bei 25°C aufweist. Nach Zugabe der restlichen Menge des Wassers wird dann eine Öl-in-Wasser-Emulsion gebildet.

Bei dem erfindungsgemäßen Verfahren können die Bestandteile (1) bis (5) in beliebiger Reihenfolge miteinander gemischt werden. Vorzugsweise wird der Katalysator (3) vor oder während der Herstellung der Dispersion,

bevorzugt Emulsion, zuletzt der Mischung zugefügt.

Vorzugsweise wird ein kleiner Teil der Gesamtmenge des Wassers (5) mit Emulgator (4), Organopolysiloxan (2) und organischer Verbindung (1) gemischt, Katalysator (3) zugefügt, wobei sich eine hochviskose Phase bildet, die dann nach Zugabe der restlichen Menge des Wassers in eine Öl-in-Wasser-Dispersion, bevorzugt Öl-in-Wasser-Emulsion, übergeführt wird.

In einer weiteren Ausführungsform des erfindungsgemäßen Verfahrens wird

(i) eine Mischung enthaltend
Organopolysiloxan (2),
Emulgator (4)
und einem kleinen Teil der Gesamtmenge des Wassers (5) gebildet,
(ii) zur Mischung (i) organische Verbindung (1) zugegeben,
(iii) zur Mischung (ii) anschließend Katalysator (3) zugegeben und (iv) die Mischung (iii) mit der restlichen Menge des Wassers (5) emulgiert.

Eine Teilmenge der restlichen Menge des Wassers (5) kann dabei auch schon nach Bildung der Mischung (i) zugegeben werden.

Diese Ausführungsform hat den Vorteil, daß keine Vorabmischung der Bestandteile (1) und (2) erforderlich ist und die reinen Rohstoffe separat in den Verarbeitungsprozess eingespeist werden können.

Nach Erhalt der erfindungsgemäßen mehrphasigen Zubereitung von Organosiliciumverbindungen kann weiterer Emulgator (6) mit einem Molekulargewicht (Zahlenmittel $M_n$) von mindestens 1000 Dalton zugegeben werden. Bei dem weiteren Emulgator (6) kann es sich um eine Art von Emulgator oder um eine Mischung aus zwei verschiedenen Arten von Emulgatoren handeln. Vorzugsweise werden nicht-ionische Emulgatoren eingesetzt. Bevorzugte Beispiele für weitere Emulgatoren (6) sind Ricinusölethoxylate mit 20 bis 200 Ethylenoxideinheiten. Weiterer Emulgator (6) wird dabei in Mengen von vorzugsweise 0,3 bis 3,0 Gew.-%, bezogen auf das Gesamtgewicht der mehrphasigen Zubereitung eingesetzt.

Diese Maßnahme hat den Vorteil, daß die erfindungsgemäßen mehrphasigen Zubereitungen, bevorzugt wäßrige Emulsionen, bei bzw. nach der Abmischung mit organischen Dispersionen verbesserte Stabilitäten aufweisen und Unverträglichkeiten, wie z.B. Kraterbildung oder Entstehung von pin holes verhindert werden.

Bei dem erfindungsgemäßen Verfahren können inerte, organische Lösungsmittel mitverwendet werden, obwohl die Mitverwendung von inerten, organischen Lösungsmitteln nicht bevorzugt ist. Beispiele für inerte, organische Lösungsmittel sind Toluol, Xylol, Octanisomere, Butylacetat, 1,2-Dimethoxyethan, Tetrahydrofuran und Cyclohexan.

Des weiteren können zur Regelung des Viskositätsprofils oder aus handhabungstechnischen Gründen inerte niedermolekulare Siloxane wie Hexamethyldisiloxan, Octamethyltrisiloxan oder etwas höhere Homologe sowie cyclische Dialkylsiloxane mit 3 bis 14 Siloxyeinheiten zugesetzt werden.

In einer speziellen Ausführungsform können auch Siloxane zugesetzt werden, die durchschnittliche Molmassen von einigen Hundert bis ca. 20 000 Dalton aufweisen, sofern diese die Polyaddition der Bestandteile (1) und (2) nicht behindern. Beispiele hierfür sind alkylterminierte Polydimethylsiloxane mit einem Polymerisationsgrad etwa im Bereich von 10 bis 250, bekannt auch als Siliconöle. Die Menge dieser Zusätze kann von wenigen Prozent bis zu ca. der 4-fachen Menge des Gesamtgewichtes der Bestandteile (1) und (2) betragen. Die zugesetzte Menge ist lediglich davon abhängig, welche Eigenschaften die disperse Phase aufweisen soll.

Falls aus verarbeitungstechnischen Gründen erwünscht, kann ein die Anlagerung von Si-gebundenem Wasserstoff an aliphatische Mehrfachbindung bei Raumtemperatur verzögerndes Mittel - beispielsweise dem Gemisch aus organischer Verbindung (1) und Organopolysiloxan (2) - zugesetzt werden.

Als die Anlagerung von Si-gebundenem Wasserstoff an aliphatische Mehrfachbindung bei Raumtemperatur verzögernde Mittel, sogenannte Inhibitoren, können auch bei den erfindungsgemäßen Zusammensetzungen alle Inhibitoren gegebenenfalls verwendet werden, die auch bisher für den gleichen Zweck verwendet werden konnten. Beispiele für Inhibitoren sind 1,3-Divinyl-1,1,3,3-tetramethyldisiloxan, Benzotriazol, Dialkylformamide, Alkylthioharnstoffe, Methylethylketoxim, organische oder siliciumorganische Verbindungen mit einem Siedepunkt von mindestens 25°C bei 1012 mbar (abs.) und mindestens einer aliphatischen Dreifachbindung gemäß US-A 3,445,420, wie 1-Ethinylcyclohexan-1-ol, -1-ol, 2-Methyl-3-butin-2-ol, 3-Methyl-1-pentin-3-ol, 2,5-Dimethyl-3-hexin-2,5-diol und 3,5-Dimethyl-1-hexin-3-ol, 3,7-Dimethyl-oct-1-in-6-en-3-ol, Inhibitoren gemäß US-A 2,476,166, wie eine Mischung aus Diallylmaleinat und Vinylacetat, und Inhibitoren gemäß US 4,504,645, wie Maleinsäuremonoester.

Vorzugsweise wird der Inhibitor in Mengen von 0,001 bis 10 Gew.-%, bezogen auf das Gesamtgewicht der Bestandteile (1) und (2), eingesetzt, wobei die Menge von 0,005 bis 0,01 Gew.-% bevorzugt ist.

Das erfindungsgemäße Verfahren wird vorzugsweise beim Druck der umgebenden Atmosphäre, also etwa bei 1020 hPa (abs.), durchgeführt, es kann aber auch bei höheren oder niedrigeren Drücken durchgeführt werden. Es wird vorzugsweise in einem Temperaturbereich von 0°C bis 160°C, bevorzugt von 20°C bis 120°C, durchgeführt. Das

erfindungsgemäße Verfahren zur Herstellung einer wäßrigen Dispersion, bevorzugt wäßrigen Emulsion, wird in einem Temperaturbereich von 0 °C bis 80 °C durchgeführt.

Das erfindungsgemäße Verfahren kann absatzweise, halbkontinuierlich oder vollkontinuierlich durchgeführt werden.

Das erfindungsgemäße Verfahren hat den Vorteil, daß keine niedermolekularen flüchtigen oder cyclischen Nebenprodukte ohne Endfunktionen anfallen und daß die eingesetzten Organopolysiloxane (2) gegebenenfalls einfach zu reinigen sind. Die Entfernung von Nebenprodukten z. B. durch Destillation (Ausheizen im Vakuum) entfällt daher, was insbesondere bei höhermolekularen Organopolysiloxanen (2), die eine höhere Viskosität aufweisen, von Vorteil ist, da die Entfernung der Nebenprodukte aufgrund der höheren Viskosität der Endprodukte aufwendig und unvollständig ist.

Die erfindungsgemäße mehrphasige Zubereitung, vorzugsweise wäßrige Dispersion, bevorzugt wäßrige Emulsion, enthält Siloxancopolymere vorzugsweise in Mengen von 20 bis 70 Gew.-%, bevorzugt 35 bis 60 Gew.-%.

Die erfindungsgemäße wäßrige Dispersion, bevorzugt wäßrige Emulsion besitzt eine Teilchengröße von vorzugsweise 100 bis 500 nm, bevorzugt 150 bis 300 nm.

Die nach dem erfindungsgemäßen Verfahren erhaltenen mehrphasigen Zubereitungen, vorzugsweise wäßrige Dispersionen, bevorzugt wäßrige Emulsionen, von Siloxancopolymeren werden für Hydrosilylierungsreaktionen, als Polymerrohstoffe zum Aufbau von Netzwerken und zur Herstellung von Telechelen mit gleichen oder verschiedenen Endgruppen verwendet.

Die erfindungsgemäßen wäßrigen Dispersionen, bevorzugt wäßrigen Emulsionen, von Siloxancopolymeren werden verwendet zur Oberflächenbehandlung von flexiblen Materialien wie Leder oder Kunstleder, z.B. aus Polyurethan, sowie starren Flächen, wie Fußböden aus Stein, Kunststein, Kunststoffen, Fliesen aus Keramik, Steingut oder Steinzeug.

Die Applizierung in dünner Schicht bewirkt einen kontrollierten Gleiteffekt.

Beispiel 1

In einem Behälter werden 7,4 g destilliertes Wasser, 32 g einer 80 %igen wäßrigen Lösung eines Isotridecylalkoholethoxylats der durchschnittlichen Formel $C_{13}H_{27}O(C_2H_4O)_{10}H$ und 350 g einer Mischung aus 0,65 Gew.-Teilen 1,7-Octadien und 99,35 Gew.-Teilen eines α, ω-Dihydrogenpolydimethylsiloxans mit 0,0119 Gew.-% Si-gebundenem Wasserstoff vorgelegt und bei einer Drehzahl von 1.500 U/min. in einem Dissolver gemischt.

Anschließend werden 640 mg einer Karstedt-Katalysatorlösung mit 1,1 Gew.-% Pt-Gehalt (Platin-1,3-Divinyl-1,1,3,3-tetramethyldisiloxankomplex gemäß US 3,775,452, Bruce D. Karstedt, General Electric Company, ausgegebenen am 27. November 1973) eingearbeitet bis sich eine hochviskose Phase bildet. Diese wird dann zügig mit 400 g destilliertem Wasser unter abfallender Drehzahl (von 5.000 auf 1.000 U/min.) zu einer milchig weißen, glatten Emulsion verarbeitet, die eine mittlere Teilchengröße von 250 nm hat.

Durch Zugabe von Aceton zu einem Teil der Emulsion wird das entstandene Hochpolymer gefällt und getrocknet. Es ist in Toluol löslich und hat eine Viskosität von 1,3 x $10^7$ mPa·s bei 25°C und ein mittleres Molgewicht (Mw) von 415 000.

Im $^1$H-NMR können auch bei sehr starker Vergrößerung des Bereichs von 4,5 bis 6,0 ppm weder SiH- noch 1-Octenylgruppen nachgewiesen werden.

Die bei 25 °C gelagerte Emulsion ist mehr als 6 Monate lang stabil.

Beispiel 2

Die Arbeitsweise von Beispiel 1 wird wiederholt mit 350 g einer Mischung aus 1,14 Gew.-Teilen 1,2,4-Trivinylcyclohexan und 98,86 Gew.-Teilen eines α, ω-Dihydrogenpolydimethylsiloxans mit 0,0119 Gew.-% Si-gebundenem Wasserstoff anstelle der in Beispiel 1 beschriebenen Mischung aus 1,7-Octadien und α, ω-Dihydrogenpolydimethylsiloxan. Die erhaltene Emulsion mit einer mittleren Teilchengröße von 220 nm ist bei 25 °C mehr als 6 Monate unverändert stabil. Für das gefällte Polymer wird eine Viskosität von 3,9 x $10^6$ mPa·s bei 25°C ermittelt. Das Polymer ist in Toluol löslich und weist ein C=C-Equivalent von 10 650 g/C=C auf.

Beispiel 3

Entsprechend der Arbeitsweise von Beispiel 1 werden nun 350 g einer Mischung aus 0,40 Gew.-Teilen 1,2,4-Trivinylcyclohexan und 99,60 Gew.-Teilen eines α, ω-Dihydrogenpolydimethylsiloxans mit 0,0119 Gew.-% Si-gebundenem Wasserstoff eingesetzt. Das gefällte hochverzweigte Polymer ist in Toluol löslich und hat eine Viskosität von mehr als 2 x $10^7$ mPa s bei 25°C. Das GPC-Spektrum (Gelpermeationschromatographie) zeigt eine multimodale, sehr breite Verteilung des Molekulargewichtes bis über $10^6$ g/Mol.

Das Polymer weist ein Si-H-Equivalentgewicht von 22 500 g/SiH auf.

Die Emulsion hat eine mittlere Teilchengröße von 240 nm und ist bei 25 °C länger als 6 Monate lang stabil.

Beispiel 4

Es wird zunächst wie in Beispiel 1 verfahren. Vor der Zumischung des Pt-Katalysators werden nun zuerst 10 g destilliertes Wasser eingearbeitet, bis sich eine hochviskose Phase bildet. Diese wird dann langsam mit 80 g destilliertem Wasser verdünnt, danach wird 640 mg der Karstedt-Katalysator-Lösung mit 1,1 Gew.-% Pt-Gehalt eingearbeitet. Es wird eine durchscheinende cremige Masse, die bei 25 °C monatelang stabil ist, erhalten.

Zur Herstellung einer Emulsion mit 50 % Festgehalt wird die Hälfte der Creme mit 150 g destilliertem Wasser unter abfallender Drehzahl verdünnt. Die milchig weiße Emulsion hat eine Teilchengröße von 250 nm und ist bei 25 °C über 6 Monate lang stabil.

Beispiel 5

In einem Behälter werden 17,0 g destilliertes Wasser und 50,0 g einer 80%igen wäßrigen Lösung eines Isotridecylalkoholethoxylats der durchschnittliche Formel $C_{13}H_{27}O(C_2H_4O)_{10}H$ vermischt. In einem Dissolver werden zu dieser Mischung bei 1000 U/min. insgesamt 349,5 g eines $\alpha$, $\omega$-Dihydrogen-polydimethylsiloxans (entsprechend 56 mg Si-gebundenem Wasserstoff) zudosiert, worauf sich eine hochviskose Phase bildet. Über eine Dosierpumpe werden in einem Zeitraum von 4 Minuten 90,0 g destilliertes Wasser zugespeist und das Gemisch wird in ein Gemisch mit cremiger Konsistenz übergeführt. Danach werden 2,33 g 1,7-Octadien und 640 mg der Karstedt-Katalysatorlösung aus Beispiel 1 bei ca. 5500 U/min. nacheinander eingespeist und in der cremigen Masse verteilt. Bei fallender Drehzahl werden erst langsam dann schneller innerhalb von 10 Minuten insgesamt 300 ml destilliertes Wasser zudosiert. Die filtrierte Emulsion hat eine mittlere Teilchengröße von 190 nm. Das mit Aceton gefällte Polymer ist in Toluol löslich und hat eine Viskosität von 1,4 x $10^6$ mPa.s bei 25°C. Es lassen sich keine 1-Octenylgruppen mehr nachweisen.

Beispiel 6

Die filtrierte Emulsion aus Beispiel 5 wird nach Fertigstellung mit verschiedenen Mengen einer 50%igen Lösung eines hochmolekularen Emulgators in Wasser versetzt. Der Emulgator ist ein Ricinusölethoxylat mit einem durchschnittlichen Molekulargewicht von ca. 4500 Dalton, käuflich erwerblich als 50%ige wässrige Lösung unter der Bezeichnung G 1300 bei der Fa. Atlas.

Es werden jeweils folgende Mengen des Emulgators pro 100 ml Emulsion eingerührt:

0,7 g Atlas G 1300
1,4 g Atlas G 1300
2,8 g Atlas G 1300

In allen drei Fällen wird keine Teilchengrößenveränderung beobachtet; die Emulsionen sind unverändert stabil.

## Patentansprüche

**1.** Verfahren zur Herstellung von mehrphasigen Zubereitungen von Organosiliciumverbindungen
durch (A) Bildung einer Mischung enthaltend
mindestens zwei aliphatische Doppelbindungen enthaltende organische Verbindung (1) der allgemeinen Formel

$$R^2(CR^1{=}CH_2)_x, \tag{I}$$

wobei $R^1$ ein Wasserstoffatom oder einen Alkylrest mit 1 bis 6 Kohlenstoffatomen je Rest,
$R^2$ einen zweiwertigen, dreiwertigen oder vierwertigen Kohlenwasserstoffrest mit 1 bis 25 Kohlenstoffatomen je Rest
und x 2, 3 oder 4 bedeutet,

Organopolysiloxan (2) mit durchschnittlich mehr als einem Si-gebundenen Wasserstoffatom je Molekül,

die Anlagerung von Si-gebundenem Wasserstoff an aliphatische Doppelbindung förderndem Katalysator (3), Emulgator (4)
und mit (1) und (2) nicht mischbarem Mittel (5),
und (B) Emulgieren der Mischung,
mit der Maßgabe, daß
aliphatische Doppelbindung in organischer Verbindung (1) zu Si-gebundenem Wasserstoff im Organopolysiloxan (2)
im Verhältnis von 0,1:1 bis 20:1 vorliegt.

**2.** Verfahren nach Anspruch 1, **dadurch gekennzeichnet, daß** es sich um ein Verfahren zur Herstellung von zweiphasigen Zubereitungen handelt.

**3.** Verfahren nach Anspruch 1 oder 2, **dadurch gekennzeichnet, daß** das mit (1) und (2) nicht mischbare Mittel (5) Wasser ist.

**4.** Verfahren nach Anspruch 3, **dadurch gekennzeichnet, daß** die mehrphasige Zubereitung eine Dispersion oder Emulsion ist.

**5.** Verfahren nach Anspruch 1, **dadurch gekennzeichnet, daß** $R^1$ ein Wasserstoffatom ist.

**6.** Verfahren nach Anspruch 1, **dadurch gekennzeichnet, daß** als Organopolysiloxan (2) solches der allgemeinen Formel

$$H_dR_{3-d}SiO(SiR_2O)_o(SiRHO)_pSiR_{3-d}H_d \quad \text{(III)},$$

wobei

R gleiche oder verschiedene, gegebenenfalls halogenierte Kohlenwasserstoffreste mit 1 bis 18 Kohlenstoffatom(en) je Rest bedeuten,
d 0 oder 1,
o 0 oder eine ganze Zahl von 1 bis 1000 und
p 0 oder eine ganze Zahl von 1 bis 6 bedeutet, eingesetzt wird.

**7.** Verfahren nach Anspruch 6, **dadurch gekennzeichnet, daß** d 1 ist und p 0 ist.

**8.** Verfahren nach einem der Ansprüch 1 bis 7 **dadurch gekennzeichnet, daß**

(i) eine Mischung enthaltend
Organopolysiloxan (2),
Emulgator (4)
und einem kleinen Teil des Wassers (5) gebildet wird,
(ii) zur Mischung (i) organische Verbindung (1) zugegeben wird,
(iii) zur Mischung (ii) anschließend Katalysator (3) zugegeben wird

und (iv) die Mischung (iii) mit dem restlichen Wasser (5) emulgiert wird.

**9.** Verfahren nach einem der Ansprüche 1 bis 8, **dadurch gekennzeichnet, daß** nach Erhalt der mehrphasigen Zubereitung
weiterer Emulgator (6) mit einem Molekulargewicht von mindestens 1000 Dalton zugegeben wird.

**10.** Verfahren nach Anspruch 9, **dadurch gekennzeichnet, daß** als weiterer Emulgator (6) Ricinusölethoxylate mit 20 bis 200 Ethylenoxideinheiten eingesetzt werden.

**11.** Verfahren nach Anspruch 1, **dadurch gekennzeichnet, daß** das mit (1) und (2) nicht mischbare Mittel (5) eine Polyalkylenoxidverbindung ist, die mit Wasser in jedem Verhältnis klar und homogen mischbar ist.

**12.** Mehrphasige Zubereitung von Organosiliciumverbindungen herstellbar durch

(A) Bildung einer Mischung enthaltend
mindestens zwei aliphatische Doppelbindungen enthaltende organische Verbindung (1) der allgemeinen Formel

$$R^2(CR^1{=}CH_2)_x, \qquad (I)$$

wobei

$R^1$ ein Wasserstoffatom oder einen Alkylrest mit 1 bis 6 Kohlenstoffatomen je Rest,
$R^2$ einen zweiwertigen, dreiwertigen oder vierwertigen Kohlenwasserstoffrest mit 1 bis 25 Kohlenstoffatomen je Rest
und x 2, 3 oder 4 bedeutet,

Organopolysiloxan (2) mit durchschnittlich mehr als einem Si-gebundenen Wasserstoffatom je Molekül,
die Anlagerung von Si-gebundenem Wasserstoff an aliphatische Doppelbindung förderndem Katalysator (3), Emulgator (4)
und mit (1) und (2) nicht mischbarem Mittel (5),
und (B) Emulgieren der Mischung
mit der Maßgabe, daß
aliphatische Doppelbindung in organischer Verbindung (1) zu Si-gebundenem Wasserstoff im Organopolysiloxan (2)
im Verhältnis von 0,1:1 bis 20:1 vorliegt.

**13.** Mehrphasige Zubereitung von Organosiliciumverbindungen nach Anspruch 12, **dadurch gekennzeichnet, daß** sie Siloxancopolymere mit einer Viskosität von 500 000 mPa.s bis 5 x $10^8$ mPa.s bei 25°C enthält.

**14.** Mehrphasige Zubereitung von Organosiliciumverbindungen nach Anspruch 12, **dadurch gekennzeichnet, daß** sie Siloxancopolymere mit einer Viskosität von 1 x $10^6$ mPa.s bis 1 x $10^8$ mPa.s bei 25°C enthält.

**15.** Mehrphasige Zubereitungen von Organosiliciumverbindungen nach Anspruch 12, 13 oder 14, **dadurch gekennzeichnet, daß** es zweiphasige Zubereitungen von Organosiliciumverbindungen sind.

## Claims

**1.** Process for the preparation of multiphase formulations of organosilicon compounds
by (A) formation of a mixture containing
organic compound (1) containing at least two aliphatic double bonds and of the general formula

$$R^2(CR^1{=}CH_2)_x, \qquad (I)$$

in which

$R^1$ denotes a hydrogen atom or an alkyl radical having 1 to 6 carbon atoms per radical,
$R^2$ denotes a divalent, trivalent or tetravalent hydrocarbon radical having 1 to 25 carbon atoms per radical,
and x denotes 2, 3 or 4,

organopolysiloxane (2) having on average more than one Si-bonded hydrogen atom per molecule,
catalyst (3) promoting the addition of Si-bonded hydrogen at an aliphatic double bond,
emulsifier (4)
and agent (5) immiscible with (1) and (2),
and (B) emulsification of the mixture,
with the proviso that the ratio of aliphatic double bond in organic compound (1) to Si-bonded hydrogen in the

organopolysiloxane (2) is from 0.1 : 1 to 20 : 1.

**2.** Process according to Claim 1, **characterized in that** it is a process for the preparation of two-phase formulations.

**3.** Process according to Claim 1 or 2, **characterized in that** the agent (5) immiscible with (1) and (2) is water.

**4.** Process according to Claim 3, **characterized in that** the multiphase formulation is a dispersion or emulsion.

**5.** Process according to Claim 1, **characterized in that** $R^1$ is a hydrogen atom.

**6.** Process according to Claim 1, **characterized in that** the organopolysiloxane (2) used is one of the general formula

$$H_dR_{3-d}SiO(SiR_2O)_o(SiRHO)_pSiR_{3-d}H_d \quad (III),$$

in which

R denote identical or different, optionally halogenated hydrocarbon radicals having 1 to 18 carbon atom(s) per radical,
d denotes 0 or 1,
o denotes 0 or an integer from 1 to 1000 and
p denotes 0 or an integer from 1 to 6.

**7.** Process according to Claim 6, **characterized in that** d is 1 and p is 0.

**8.** Process according to any of Claims 1 to 7, **characterized in that**

(i) a mixture containing
organopolysiloxane (2),
emulsifier (4)
and a small part of the water (5) is formed,
(ii) organic compound (1) is added to the mixture (i),
(iii) catalyst (3) is then added to the mixture (ii)

and (iv) the mixture (iii) is emulsified with the remaining water (5).

**9.** Process according to any of Claims 1 to 8, **characterized in that** further emulsifier (6) having a molecular weight of at least 1000 Dalton is added after the multiphase formulation is obtained.

**10.** Process according to Claim 9, **characterized in that** castor oil ethoxylates having 20 to 200 ethylene oxide units are used as further emulsifier (6).

**11.** Process according to Claim 1, **characterized in that** the agent (5) immiscible with (1) and (2) is a polyalkylene oxide compound which is miscible with water in any ratio so as to form a clear and homogeneous mixture.

**12.** Multiphase formulation of organosilicon compounds which can be prepared by

(A) formation of a mixture containing
organic compound (1) containing at least two aliphatic double bonds and of the general formula

$$R^2\,(CR^1{=}CH_2\,)_x, \quad (I)$$

in which

$R^1$ denotes a hydrogen atom or an alkyl radical having 1 to 6 carbon atoms per radical,
$R^2$ denotes a divalent, trivalent or tetravalent hydrocarbon radical having 1 to 25 carbon atoms per radical

and x denotes 2, 3 or 4,

organopolysiloxane (2) having on average more than one Si-bonded hydrogen atom per molecule,
catalyst (3) promoting the addition of Si-bonded hydrogen at an aliphatic double bond,
emulsifier (4)
and agent (5) immiscible with (1) and (2)
and (B) emulsification of the mixture,
with the proviso that the ratio of aliphatic double bond in organic compound (1) to Si-bonded hydrogen in the organopolysiloxane (2) is from 0.1 : 1 to 20 : 1.

**13.** Multiphase formulation of organosilicon compounds according to Claim 12, **characterized in that** it contains siloxane copolymers having a viscosity of from 500,000 mPa.s to 5 x $10^8$ mPa.s at 25°C.

**14.** Multiphase formulation of organosilicon compounds according to Claim 12, **characterized in that** it contains siloxane copolymers having a viscosity of from 1 x $10^6$ mPa.s to 1 x $10^8$ mPa.s at 25°C.

**15.** Multiphase formulations of organosilicon compounds according to Claim 12,13 or 14, **characterized in that** they are two-phase formulations of organosilicon compounds.

**Revendications**

**1.** Procédé pour la préparation de compositions multiphasiques de composés organosiliciés
par (A) formation d'un mélange contenant
un composé organique (1) contenant au moins deux doubles liaisons aliphatiques, de formule générale

$$R^2(CR^1{=}CH_2)_x \qquad (I)$$

dans laquelle

$R^1$ représente un atome d'hydrogène ou un radical alkyle ayant de 1 à 6 atomes de carbone par radical,
$R^2$ représente un radical hydrocarboné divalent, trivalent ou tétravalent ayant de 1 à 25 atomes de carbone par radical
et x représente 2, 3 ou 4,

un organopolysiloxane (2) comportant en moyenne plus d'un atome d'hydrogène lié à Si par molécule,
un catalyseur (3) favorisant la fixation de l'hydrogène lié à Si sur la double liaison aliphatique,
un émulsifiant (4)
et un agent (5) non miscible à (1) ni à (2),
et (B) émulsification du mélange,
étant entendu que la double liaison aliphatique dans le composé organique (1) se trouve dans un rapport allant de 0,1:1 à 20:1 relativement à 1'hydrogène lié à Si dans l'organopolysiloxane (2).

**2.** Procédé selon la revendication 1, **caractérisé en ce qu'**il s'agit d'un procédé pour la préparation de compositions biphasiques.

**3.** Procédé selon la revendication 1 ou 2, **caractérisé en ce** l'agent (5) non miscible à (1) ni à (2) est 1'eau.

**4.** Procédé selon la revendication 3, **caractérisé en ce que** la composition multiphasique est une dispersion ou une émulsion.

**5.** Procédé selon la revendication 1, **caractérisé en ce que** $R^1$ est un atome d'hydrogène.

**6.** Procédé selon la revendication 1, **caractérisé en ce qu'**on utilise comme organopolysiloxane (2) celui de formule générale

$$H_dR_{3-d}SiO(SiR_20)_o(SiRHO)_pSIR_{3-d}H_d \qquad (III)$$

dans laquelle

les radicaux R, identiques ou différents, représentent des radicaux hydrocarbonés éventuellement halogénés ayant de 1 à 18 atomes de carbone par radical,
d est 0 ou 1,
o est 0 ou un nombre entier allant de 1 à 1 000 et
p est 0 ou un nombre entier allant de 1 à 6.

**7.** Procédé selon la revendication 6, **caractérisé en ce que** d est 1 et p est 0.

**8.** Procédé selon l'une quelconque des revendications 1 à 7, **caractérisé en ce que**

(I) on forme un mélange contenant
l'organopolysiloxane (2),
l'émulsifiant (4)
et une petite partie de l'eau (5),
(II) on ajoute au mélange (I) le composé organique (1),
(III) on ajoute ensuite au mélange (II) le catalyseur (3),

et (IV) on émulsionne le mélange (III) avec le restant de l'eau (5).

**9.** Procédé selon l'une quelconque des revendications 1 à 8, **caractérisé en ce qu'**après avoir obtenu la composition multiphasique,
on ajoute un autre émulsifiant (6) ayant une masse moléculaire d'au moins 1 000 daltons.

**10.** Procédé selon la revendication 9, **caractérisé en ce qu'**on ajoute comme autre émulsifiant (6) des produits d'éthoxylation d'huile de ricin comportant de 20 à 200 groupes oxyéthylène.

**11.** Procédé selon la revendication 1, **caractérisé en ce que** l'agent (5) non miscible à (1) ni à (2) est un composé de type polyoxyalkylène qui est miscible à l'eau en toute proportion en donnant un mélange limpide et homogène.

**12.** Composition multiphasique de composés organosiliciés, pouvant être préparée
par (A) formation d'un mélange contenant
un composé organique (1) contenant au moins deux doubles liaisons aliphatiques, de formule générale

$$R^2(CR^1{=}CH_2)_x \qquad (I)$$

dans laquelle

$R^1$ représente un atome d'hydrogène ou un radical alkyle ayant de 1 à 6 atomes de carbone par radical,
$R^2$ représente un radical hydrocarboné divalent, trivalent ou tétravalent ayant de 1 à 25 atomes de carbone par radical
et x représente 2, 3 ou 4,

un organopolysiloxane (2) comportant en moyenne plus d'un atome d'hydrogène lié à Si par molécule,
un catalyseur (3) favorisant la fixation de l'hydrogène lié à Si sur la double liaison aliphatique,
un émulsifiant (4)
et un agent (5) non miscible à (1) ni à (2),
et (B) émulsification du mélange,
étant entendu que la double liaison aliphatique dans le composé organique (1) se trouve dans un rapport allant de 0,1:1 à 20:1 relativement à l'hydrogène lié à Si dans l'organopolysiloxane (2).

**13.** Composition multiphasique de composés organosiliciés selon la revendication 12, **caractérisée en ce qu'**elle

contient des copolymères siloxane ayant une viscosité de 500 000 mPa.s à 5 x $10^8$ mPa.s à 25°C.

**14.** Composition multiphasique de composés organosiliciés selon la revendication 12, **caractérisée en ce qu'**elle contient des copolymères siloxane ayant une viscosité de 1 x $10^6$ mPa.s à 1 x $10^8$ mPa.s à 25°C.

**15.** Compositions multiphasiques de composés organosiliciés selon la revendication 12, 13 ou 14, **caractérisées en ce qu'**il s'agit de compositions biphasiques de composés organosiliciés.